# EUROPEAN PATENT APPLICATION

(11) **EP 4 611 346 A1**
(43) Date of publication of application: **03.09.2025**
(21) Application number: 23929394.7
(22) Date of filing: 31.03.2023
(51) Int. Cl.: H04L 61/2596

(54) **STORING A MAC ADDRESS TABLE ENTRY**

(71) Applicant: New H3C Technologies Co., Ltd., Hangzhou, Zhejiang 310052 (CN)
(72) Inventor: LIANG, Xuewei, Beijing 100102 (CN)
(74) Representative: IPAZ
(86) International application number: PCT/CN2023/085451
(87) International publication number: WO 2024/197808

(57) **Abstract**

The present disclosure provides an example of a network apparatus and the storage of a MAC address table entry. The network apparatus learns an MAC address table entry; calculates a hash value based on a hash algorithm for each of hash tables and a key of the MAC address table entry; wherein each of the hash tables is configured with a unique hash algorithm. The network apparatus checks a state of a storage location indicated by a corresponding hash value of each of the hash tables sequentially based on a search priority of each of the hash tables in a sequence of the search priorities from high to low; stores the MAC address table entry in the first free storage location of found storage locations; and decreases a search priority of a hash table with a highest search priority to a lowest search priority, and increases the search priority of each of other hash tables by one level, respectively.

## Description

### Background

The network apparatus can learn a MAC (Media Access Control) address table entry based on a source MAC address of a received Ethernet packet, and obtain a hash value indicating a storage location in a hash table by implementing a hash calculation of a key of the MAC address table entry. When the storage location indicated by the hash value is free, the MAC address table entry is stored in the corresponding location in a data structure of (key, value). A hash collision would occur when another MAC address table entry has been stored in the storage location indicated by the hash value.

### Brief Description of the Drawings

Fig. 1 is a schematic diagram of a method for storing an MAC address table entry based on an example of the present disclosure;
Figs. 2A-2D are schematic diagrams of storing an MAC address table entry based on an example of the present disclosure;
Figs. 3A-3E are schematic diagrams of storing an MAC address table entry based on an example of the present disclosure;
Fig. 4 is a schematic diagram of an apparatus for storing an MAC address table entry based on an example of the present disclosure;
Fig. 5 is a schematic diagram of an apparatus for storing an MAC address table entry based on an example of the present disclosure.

### Detailed Description

The present disclosure will be explained below by several examples shown in the drawings.

Among the terms used, the term "including" means including but not limited to; the term "comprising" means including but not limited to; and the term "based on" means based on at least a part of it. Furthermore, the term "one" is intended to indicate one of the specific components.

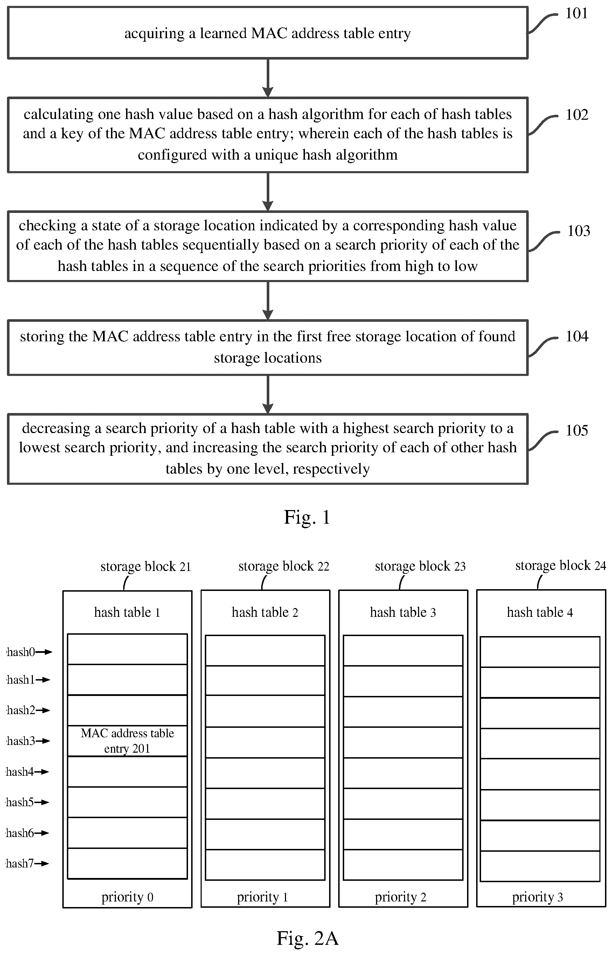

Fig. 1 is a schematic diagram of a method for storing a MAC address table entry based on an example of the present disclosure, which includes:
Process 101, acquiring a learned MAC address table entry.
Process 102, calculating one hash value based on a hash algorithm for each of hash tables and a key of the MAC address table entry; wherein each of the hash tables is configured with a unique hash algorithm.
Process 103, checking a state of a storage location indicated by a corresponding hash value of each of the hash tables sequentially based on a search priority of each of the hash tables in a sequence of the search priorities from high to low.
Process 104, storing the MAC address table entry in the first free storage location of found storage locations.
Process 105, decreasing a search priority of a hash table with a highest search priority to a lowest search priority, and increasing the search priority of each of other hash tables by one level, respectively.

The example shown in Fig. 1 has beneficial effects that the search sequence for searching multiple hash tables for the storage location for storing an MAC address table entry dynamically changes, so as to avoid following a fixed search sequence.

In order to reduce a hash collision in a MAC address hash table, a network apparatus may provide multiple hash tables to store MAC address table entries, wherein each of the hash tables is stored in one storage block and is configured with a unique hash algorithm. When a MAC address table entry is added to a network apparatus, a hash value of the MAC address table entry is calculated based on a hash algorithm for the first storage block; when a hash collision occurs in the first storage block, a new hash value is calculated based on a hash algorithm for the second storage block. If a storage location of the second storage block indicated by the new hash value is also occupied, the hash calculation continues based on a hash algorithm for the next storage block and so forth until a free storage location is found. Or, the network apparatus may calculate multiple hash values based on the hash algorithm configured for each of the hash tables, and search for a free storage location, starting from the hash table of the first storage block.

However, the mechanism of searching for a free storage location based on a fixed search sequence may significantly increase the number of MAC address table entries stored in hash tables with higher search priorities, and it may cause more hash collisions.

Figs. 2A-2D are schematic diagrams of storing a MAC address table entry provided by examples of the present disclosure.

In Fig. 2A, hash tables 1-4 have been stored in four storage blocks 21-24 of a storage medium, such as a TCAM (Ternary Content Addressable Memory), of a network apparatus, respectively. Each of the hash tables 1-4 is configured with a unique hash algorithm, and preset search priorities of the hash tables 1-4 are 0 to 3 from high to low with a hash bucket depth of 1. In Fig. 2A, storage locations in each of the hash tables 1-4 are indicated by hash values of hashes 0-7.

The network apparatus may learn a MAC address table entry 201 based on a source MAC address, a VLAN (Virtual Local Area Network) and a receiving port of a received Ethernet packet, and calculate four hash values based on a key (MAC address, VLAN) of the MAC address table entry 201 and respective hash algorithms of the hash tables 1-4, namely, the hash 3, the hash 1, the hash 0 and the hash 7.

The network apparatus, based on the search priorities of the hash tables 1-4, may firstly search the hash tables 1-4 in a sequence of the search priorities from high to low, find a state of a storage location indicated by a hash value, i.e., the hash 3, of the hash table 1 is free, and may store the MAC address table entry 201 in the free storage location indicated by the hash 3 of the hash table 1.

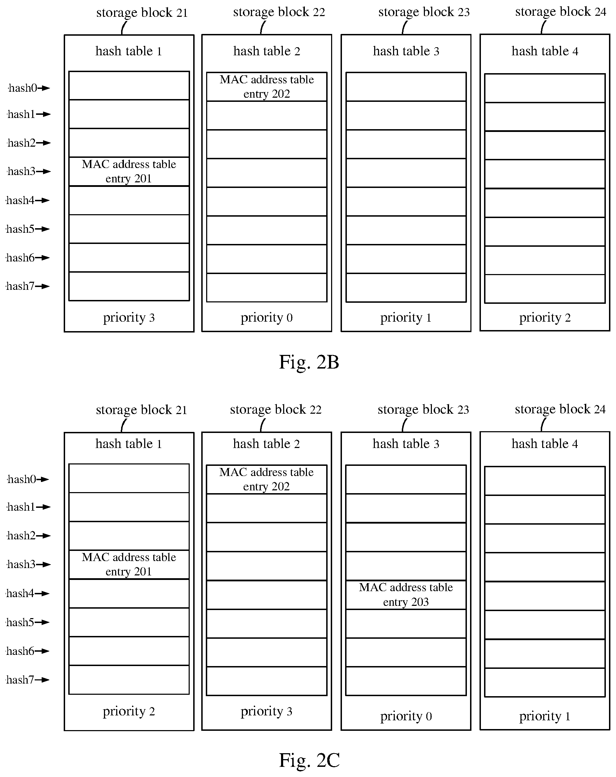

In Fig. 2B, after the MAC address table entry 201 is added, the network apparatus may calculate a storage rate of the hash table 1, decreases the search priority of the hash table 1 from the highest search priority 0 to the lowest search priority 3, and increases the search priorities of the hash tables 2-4 by one level, respectively, namely, to the priority 0, a priority 1 and a priority 2.

The network apparatus may learn a MAC address table entry 202 based on a source MAC address, a virtual local area network (VLAN) and a receiving port of a received Ethernet packet, and calculates four hash values based on a key of the MAC address table entry 202 and the respective hash algorithms of the hash tables 1-4.

The network apparatus, based on the search priorities of the hash tables 1-4, may firstly search the hash tables 1-4 in a sequence of the search priorities from high to low, find a state of a storage location indicated by a hash value, such as the hash 0, of the hash table 2 is free, and may store the MAC address table entry 202 in the free storage location indicated by the hash 0 of the hash table 2.

In Fig. 2C, after the MAC address table entry 202 is added, the network apparatus may calculate a storage rate of the hash table 2, decrease the search priority of the hash table 2 from the highest search priority 0 to the lowest search priority 3, and increase the search priorities of the hash tables 3, 4 and 1 by one level, respectively, namely, to the priority 0, the priority 1 and the priority 2.

The network apparatus may learn a MAC address table entry 203 based on a source MAC address, a virtual local area network (VLAN) and a receiving port of a received Ethernet packet, and calculate four hash values based on a key of the MAC address table entry 203 and the respective hash algorithms of the hash tables 1-4.

The network apparatus, based on the search priorities of the hash tables 1-4, may firstly search the hash tables 1-4 in a sequence of the search priorities from high to low, find a state of a storage location indicated by a hash value, such as the hash 4, of the hash table 3 is free, and may store the MAC address table entry 203 in the free storage location indicated by the hash 4 of the hash table 3.

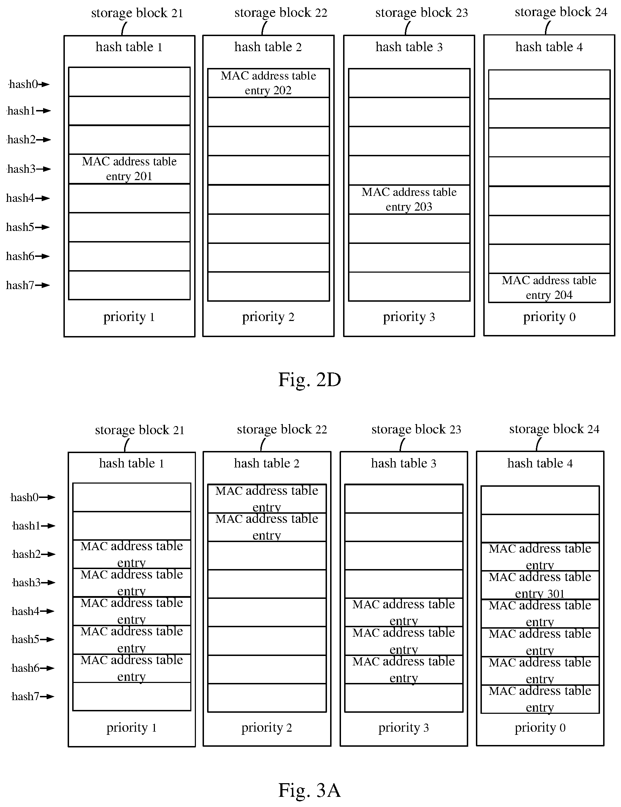

In Fig. 2D, after the MAC address table entry 203 is added, the network apparatus may calculate a storage rate of the hash table 3, decreases the search priority of the hash table 3 from the highest search priority 0 to the lowest search priority 3, and increases the search priorities of the hash tables 4, 1 and 2 by one level respectively, namely, to the priority 0, the priority 1 and the priority 2.

The network apparatus may learn a MAC address table entry 204 based on a source MAC address, a virtual local area network (VLAN) and a receiving port of a received Ethernet packet, and calculates four hash values based on a key of the MAC address table entry 204 and the respective hash algorithms of the hash tables 1-4.

The network apparatus, based on the search priorities of the hash tables 1-4, may firstly search the hash tables 1-4 in a sequence of the search priorities from high to low, find a state of a storage location indicated by a hash value, such as the hash 7, of the hash table 4 is free, and may store the MAC address table entry 204 in the free storage location indicated by the hash 7 of the hash table 4.

After the MAC address table entry 204 is added, the network apparatus may calculate a storage rate of the hash table 4, decreases the search priority of the hash table 4 from the highest search priority 0 to the lowest search priority 3, and increases the search priorities of the hash tables 1-3 by one level, namely, to the priority 0, the priority 1 and the priority 2 (not shown in Fig. 2D).

In the example shown in Figs. 2A-2D, the search sequence implemented by the network apparatus for searching free storage locations in the hash tables 1-4 is dynamic, so that the number of MAC address table entries stored in the hash tables 1-4 of the storage blocks 21-24 is more even, and the storage location of the storage blocks 21-24 can be more fully utilized.

The network apparatus may delete aged MAC address table entries in the hash tables 1-4 based on an aging time or entry deletion instructions, and after deleting each MAC address table entry, calculate a storage rate of the hash table of which aged MAC address table entries are deleted.

Figs. 3A-3E are schematic diagrams of storing a MAC address table entry provided by examples of the present disclosure. In Fig. 3A, the number of MAC address table entries stored in hash tables 1-4 is uneven after aging operations are performed.

The network apparatus may learn a MAC address table entry 301 based on a source MAC address, a virtual local area network (VLAN) and a receiving port of a received Ethernet packet, and calculates four hash values based on a key of the MAC address table entry 301 and respective hash algorithms of the hash tables 1-4, such as a hash 0, a hash 2, a hash 5 and a hash 3.

The network apparatus, based on search priorities of the hash tables 1-4, may firstly search the hash tables 1-4 in a sequence of the search priorities from high to low, find a state of a storage location indicated by a hash value, i.e., the hash 3, of the hash table 4 is free, and may store the MAC address table entry 301 in the free storage location indicated by the hash 3 of the hash table 4.

The network apparatus may calculate a storage rate of the hash table 4 after the MAC address table entry 301 is added.

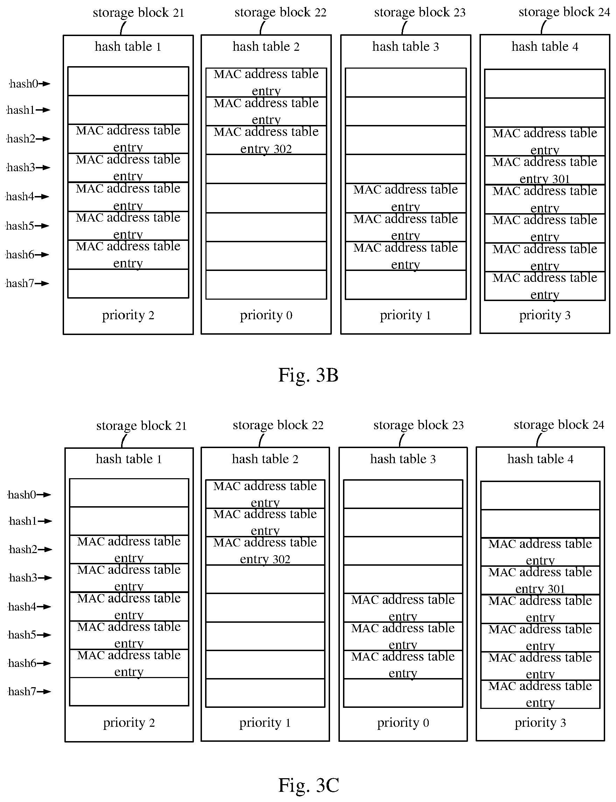

In Fig. 3B, storage rates of the hash tables 1-4 can be calculated by the network apparatus to determine whether the number of stored MAC address table entries in the hash tables 1-4 has exceeded a specified number.

The network apparatus may sort the hash tables 1-4 into the hash table 2, the hash table 3, the hash table 1 and the hash table 4 in a sequence of storage rates of all the hash tables from low to high, and sets all the hash tables with the highest search priority 0 to the lowest search priority 3 sequentially.

The network apparatus may learn a MAC address table entry 302 based on a source MAC address, a virtual local area network (VLAN) and a receiving port of a received Ethernet packet, and calculates four hash values based on a key of the MAC address table entry 302 and the respective hash algorithms of the hash tables 1-4.

The network apparatus, based on the search priorities of the hash tables 1-4, may firstly search the hash tables 1-4 in a sequence of the search priorities from high to low, find a state of a storage location indicated by a hash value, i.e., the hash 2, of the hash table 4 is free, and may store the MAC address table entry 302 in the free storage location indicated by the hash 2 of the hash table 2.

In Fig. 3B, the network apparatus may calculate the storage rate of the hash table 2 after the MAC address table entry 302 is added, and determine through calculation that the number of MAC address table entries stored in the hash tables 1-4 still exceeds the specified number. The network apparatus may sort the hash tables 1-4 into the hash table 2, the hash table 3, the hash table 1 and the hash table 4 in a sequence of storage rates of all the hash tables from low to high, and set all the hash tables with the highest search priority 0 to the lowest search priority 3 sequentially.

In Fig. 3B, the network apparatus may remain preset search priorities of hash tables having the same storage rate. Alternatively, in Fig. 3C, the hash table 2 and the hash table 3 have the same storage rates, the network apparatus may increase the search priority of the hash table 3 by one level, such as to the priority 0; and set the search priority of the hash table 2 as the lowest priority 1 among the hash tables with the same storage rate, which previously has the highest search priority.

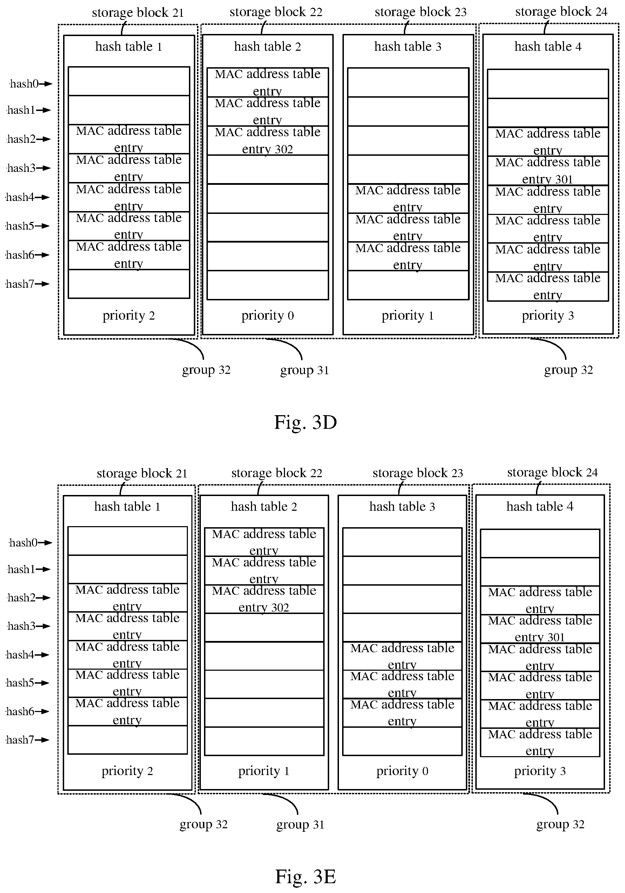

Or in Fig. 3D, after the MAC address table entry 301 is added to the hash table 4, the network apparatus may calculate the storage rate of the hash table 4. In a response of a determination that the number of MAC address table entries stored in the hash tables 1-4 has exceeded the specified number, the network apparatus may designate the hash tables 2 and 3, which have storage rates lower than a first storage rate threshold, as a search group 31 with a higher search priority, and designate the hash tables 1 and 4, which have storage rates higher than the first storage rate threshold but lower than a second storage rate threshold, as a search group 32 with a lower search priority. The network apparatus may set the hash table 2, the hash table 3, the hash table 1 and the hash table 4 with search priorities, ranging from the highest search priority 0 to the lowest search priority 3, in a sequence of storage rates of all the hash tables from low to high.

The network apparatus in Fig. 3D may calculate four hash values based on a key of the learned MAC address table entry 302 and the respective hash algorithms of the hash tables 1-4. The network apparatus may firstly search the group 31 based on the search priorities of the hash tables 1-4 in a sequence from high to low, and firstly find a storage location indicated by a hash value, i.e., the hash 2, of the hash table 2 with the highest search priority in the group 31, determine that this storage location is free, and store the MAC address table entry 302 in the free storage location indicated by the hash 2 of the hash table 2.

In Fig. 3E, the network apparatus may calculate the storage rate of the hash table 2 after the MAC address table entry 302 is added to the hash table 2 of the group 31. The network apparatus may determine that the number of MAC address table entries added in the hash tables 1-4 has exceeded the specified number, and increase the search priority of another hash table 3 in the group 31 by one level, i.e. to the priority 0, and sets the search priority of the hash table 2 in the group 31 as the lowest search priority in the same group, i.e. the priority 1. The priorities of the hash table 1 and the hash table 4 in the group 32 remain unchanged. In this way, the four hash tables in the groups 31 and 32 are sequentially set with search priorities, ranging from the highest to the lowest, in a sequence of storage rates of all the hash tables from low to high.

In the above examples, the number of storage blocks in the network apparatus and the number of table entries recorded in hash tables of the storage blocks are for illustrating that MAC address table entries are evenly stored in multiple hash tables, and are not used to limit the protection scope of the disclosure.

In the above example, a key of a MAC address table entry may include a MAC address and a VLAN, and is not intended to limit the protection scope of this disclosure. The key of the MAC address table entry stored by the network apparatus based on the above examples can also be an MAC address, or a virtual switching instance (VSI) of a VPN network and an MAC address, or an MAC address and other information indicating a forwarding domain.

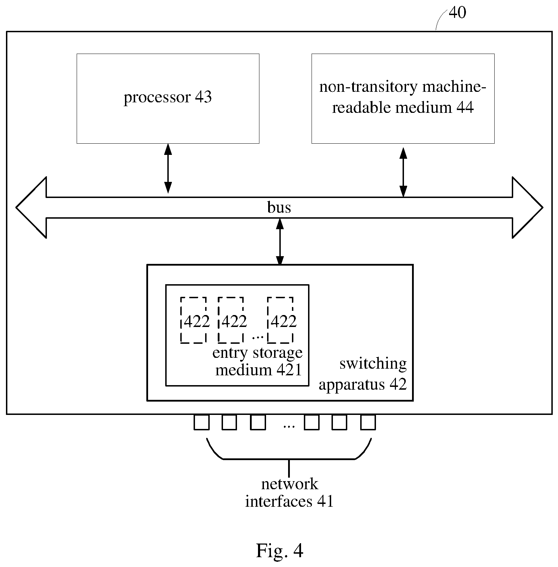

Fig. 4 is a schematic diagram of an apparatus for storing a MAC address table entry based on an example of the present disclosure. The apparatus 40 may include multiple network interfaces 41, a switching device 42, a processor 43, and a non-transitory machine-readable medium (non-transitory computer-readable medium) 44 in which processor-executable instructions are recorded. The switching device 42, the processor 43 and the non-transitory machine-readable medium 44 communicate with each other through a bus.

The switching device 42 may execute an Ethernet packet based on the MAC address table entry, delete the stored MAC address table entry based on an aging time of the MAC address table entry, and learn the MAC address table entry based on a source MAC address of the received Ethernet packet.

The switching device 42 may be realized by hardware (such as a processor of an application specific integrated circuit (ASIC)) or by a combination of software and hardware, which is not limited in the example of the present disclosure. Entry storage medium 421 of the switching device 42 has multiple storage blocks 422, and a hash table stored in each of the storage blocks 422 is configured with a unique hash algorithm.

The switching device 42 may learn a MAC address table entry based on an Ethernet packet received by any one of the network interfaces 41; calculate one hash value based on the hash algorithm for each of the hash tables and a key of the MAC address table entry; check a state of a storage location indicated by a corresponding hash value of each of the hash tables sequentially based on a search priority of each of the hash tables in a sequence of the search priorities from high to low; store the MAC address table entry in the first free storage location of found storage locations; and decrease a search priority of a hash table with a highest search priority to a lowest search priority, and increases the search priority of each of other hash tables by one level, respectively.

The search priority of each hash table in each storage block 422 of the switching device 42 may be a preset search priority. Alternatively, the search priority of each hash table in each storage block 422 of the switching device 42 may be a search priority being modified after a previous MAC address table entry adding process.

The switching device 42 further may calculate a storage rate of each of the hash tables after each MAC address table entry adding process; or may calculate the storage rate of each of the hash tables after each MAC address table entry deleting process.

The switching device 42 further may determine that the number of MAC address table entries stored in all the hash tables exceeds a specified number; set all the hash tables with search priorities, ranging from the highest to the lowest, sequentially in a sequence of storage rates of all the hash tables from low to high.

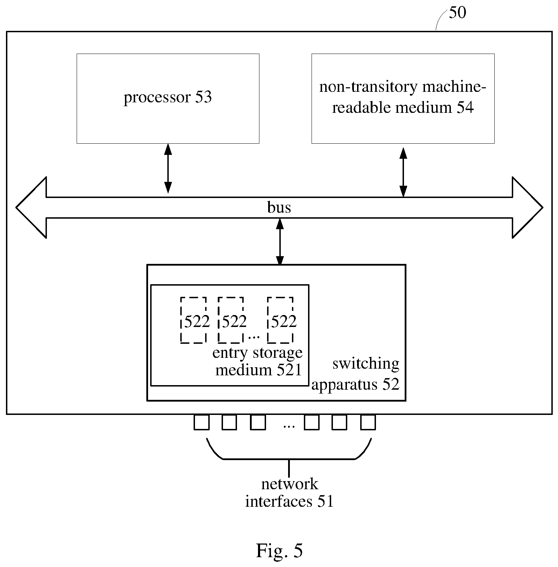

Fig. 5 is a schematic diagram of an apparatus for storing a MAC address table entry based on an example of the present disclosure. The apparatus 50 includes multiple network interfaces 51, a switching device 52, a processor 53, and a non-transitory machine-readable medium (non-transitory computer-readable medium) 54 in which processor-executable instructions are recorded. The switching device 52, the processor 53 and the non-transitory machine-readable medium 54 communicate with each other through a bus.

The switching device 52 may be realized by hardware or by a combination of software and hardware. Entry storage medium 521 of the switching device 52 has multiple storage blocks 522, and a hash table stored in each of the storage blocks 522 is configured with a unique hash algorithm.

Each of the storage blocks 522 of the switching device 52 may store one hash table and each of the storage blocks is configured with a unique hash algorithm; the MAC address table entry is learned based on an Ethernet packet received by any one of the network interfaces 51; the processor 53 executes the processor-executable instructions recorded in the non-transitory machine-readable storage medium 54 to perform the following operations of: acquiring a learned MAC address table entry; calculating one hash value based on a hash algorithm for each of hash tables and a key of the MAC address table entry, wherein each of the hash tables is configured with a unique hash algorithm; checking a state of a storage location indicated by a corresponding hash value of each of the hash tables sequentially based on a search priority of each of the hash tables in a sequence of the search priorities from high to low; storing the MAC address table entry in the first free storage location of found storage locations; and decreasing a search priority of a hash table with a highest search priority to a lowest search priority, and increasing the search priority of each of other hash tables by one level, respectively.

The search priority of each of the hash tables in each of the storage blocks 522 when the processor 53 may execute the processor-executable instructions of the non-transitory machine-readable medium 54 is a preset search priority; or, is the search priority being modified after the previous MAC address table entry adding process.

The switching device 53 may execute the processor-executable instructions of the non-transitory machine-readable medium 54 to further calculate the storage rate of each of the hash tables after each MAC address table entry adding process; or calculate the storage rate of each of the hash tables after each MAC address table entry deleting process.

The switching device 53 may execute the processor-executable instructions of the non-transitory machine-readable medium 54 to determine that the number of MAC address table entries stored in all the hash tables exceeds a specified number; set all the hash tables with search priorities, ranging from the highest to the lowest, sequentially in a sequence of storage rates of all the hash tables from low to high.

The above is only the preferred example of this disclosure, and is not used to limit this disclosure. Any modification, equivalent substitution, improvement, etc. made within the spirit and principle of this disclosure should be included in the scope of protection of this disclosure.

## Claims

1. A method for storing an MAC address table entry, comprising:
acquiring a learned MAC address table entry;
calculating one hash value based on a hash algorithm for each of hash tables and a key of the MAC address table entry; wherein each of the hash tables is configured with a unique hash algorithm;
checking a state of a storage location indicated by a corresponding hash value of each of the hash tables sequentially based on a search priority of each of the hash tables in a sequence of the search priorities from high to low;
storing the MAC address table entry in the first free storage location of found storage locations; and
decreasing a search priority of a hash table with a highest search priority to a lowest search priority, and increasing the search priority of each of other hash tables by one level, respectively.

2. The method of claim 1, wherein the search priority of each of the hash tables is a preset search priority.

3. The method of claim 1, wherein the search priority of each of the hash tables is a search priority being modified after a previous MAC address table entry adding process.

4. The method of claim 1, wherein the method further comprises:
calculating a storage rate of each of the hash tables after each MAC address table entry adding process;
calculating a storage rate of each of the hash tables after each MAC address table entry deleting process.

5. The method of claim 1, wherein the method further comprises:
determining that the number of MAC address table entries stored in all the hash tables exceeds a specified number;
setting all the hash tables with search priorities, ranging from the highest to the lowest, sequentially in a sequence of storage rates of all the hash tables from low to high.

6. An apparatus for storing an MAC address, wherein the apparatus comprises multiple network interfaces and a switching device with multiple storage blocks; wherein one hash table stored in each of the storage blocks is configured with a unique hash algorithm;
the switching device learns a MAC address table entry based on an Ethernet packet received by any one of the network interfaces; calculates one hash value based on the hash algorithm for each of the hash tables and a key of the MAC address table entry; checks a state of a storage location indicated by a corresponding hash value of each of the hash tables sequentially based on a search priority of each of the hash tables in a sequence of the search priorities from high to low; stores the MAC address table entry in the first free storage location of found storage locations; and decreases a search priority of a hash table with a highest search priority to a lowest search priority, and increases the search priority of each of other hash tables by one level, respectively.

7. The apparatus of claim 6, wherein the search priority of each of the hash tables is a preset search priority.

8. The apparatus of claim 6, wherein the search priority of each of the hash tables is a search priority being modified after a previous MAC address table entry adding process.

9. The apparatus of claim 6, wherein,
the switching device further calculates a storage rate of each of the hash tables after each MAC address table entry adding process; and calculates a storage rate of each of the hash tables after each MAC address table entry deleting process.

10. The apparatus of claim 6, wherein,
the switching device further determines that the number of MAC address table entries stored in all the hash tables exceeds a specified number; sets all the hash tables with search priorities, ranging from the highest to the lowest, sequentially in a sequence of storage rates of all the hash tables from low to high.

11. An apparatus for storing an MAC address, wherein the apparatus comprises multiple network interfaces, a switching device with multiple storage blocks, a processor, and a non-transitory machine-readable medium in which processor-executable instructions are recorded; each of the storage blocks of the switching device stores one hash table and each of the storage blocks of the switching device is configured with a unique hash algorithm;
the switching device learns a MAC address table entry based on an Ethernet packet received by any one of the network interfaces;
the processor executes the processor-executable instructions recorded in the non-transitory machine-readable storage medium to perform following operations of: acquiring the learned MAC address table entry; calculating one hash value based on a hash algorithm for each of the hash tables and a key of the MAC address table entry; wherein each of the hash tables is configured with a unique hash algorithm;
checking a state of a storage location indicated by a corresponding hash value of each of the hash tables sequentially based on a search priority of each of the hash tables in a sequence of the search priorities from high to low;
storing the MAC address table entry in the first free storage location of found storage locations; and
decreasing a search priority of a hash table with a highest search priority to a lowest search priority, and increasing the search priority of each of other hash tables by one level, respectively.

12. The apparatus of claim 11, wherein the processor executes the processor-executable instructions in the non-transitory machine-readable medium to perform the method of any one of claims 2 to 5.
